# EUROPÄISCHE PATENTSCHRIFT

(11) **EP 3 567 398 B1**
(45) Veröffentlichungstag und Bekanntmachung des Hinweises auf die Patenterteilung: **06.07.2022**
(21) Anmeldenummer: 19172803.9
(22) Anmeldetag: 06.05.2019
(51) Int. Cl.: G01S 7/486, G01S 7/481, G01S 7/497, G01S 17/10

(54) **VERFAHREN UND OPTOELEKTRONISCHER SENSOR ZUM MESSEN EINER ENTFERNUNG VON OBJEKTEN**
METHOD AND OPTOELECTRONIC SENSOR FOR MEASURING THE DISTANCE OF OBJECTS
PROCÉDÉ ET CAPTEUR OPTOÉLECTRONIQUE PERMETTANT DE MESURER L'ÉLOIGNEMENT D'OBJETS

(30) Priorität: 09.05.2018 DE 102018111218
(43) Veröffentlichungstag der Anmeldung: 13.11.2019
(73) Patentinhaber: Pepperl+Fuchs SE, 68307 Mannheim (DE)
(72) Erfinder: KLEMT, Hans-Jürgen, 12277 Berlin (DE)
(74) Vertreter: Schiffer, Axel Martin

(56) Entgegenhaltungen:
- EP-A2- 2 315 053
- JP-A- H1 123 710
- G. ZHOU ET AL: "IMPROVEMENT ON TIMING ACCURACY OF LIDAR FOR REMOTE SENSING", ISPRS - INTERNATIONAL ARCHIVES OF THE PHOTOGRAMMETRY, REMOTE SENSING AND SPATIAL INFORMATION SCIENCES, Bd. XLII-3, 2. Mai 2018 (2018-05-02), Seiten 2495-2498, XP055624496, DOI: 10.5194/isprs-archives-XLII-3-2495-2018

## Beschreibung

Die vorliegende Erfindung betrifft in einem ersten Gesichtspunkt ein Verfahren zum Messen einer Entfernung von Objekten . In einem zweiten Gesichtspunkt bezieht sich die Erfindung auf einen optoelektronischen Sensor zum Messen einer Entfernung von Objekten.

Bei einem gattungsgemäßen Verfahren werden folgende Verfahrensschritte durchgeführt: eine Sendeeinheit sendet Lichtpulse aus, eine Empfangseinheit detektiert von einem zu vermessenden Objekt zurückgestrahlte Lichtpulse und aus einer Zeitdifferenz zwischen einem Empfangszeitpunkt eines Lichtpulses und einem Aussendezeitpunkt dieses Lichtpulses wird eine Entfernung des Objekts bestimmt.

Ein gattungsgemäßer optoelektronischer Sensor zum Messen einer Entfernung von Objekten weist folgende Komponenten auf: eine Sendeeinheit zum Aussenden von Lichtpulsen in einen Erfassungsbereich, eine Empfangseinheit zum Detektieren von Lichtpulsen, die von einem zu vermessenden Objekt im Erfassungsbereich zurückgestrahlt werden, und eine Steuer- und Auswerteeinheit zum Ansteuern der Sendeeinheit und zum Auswerten der von der Empfangseinheit detektierten Lichtpulse. Die Steuer- und Auswerteeinheit ist dabei dazu eingerichtet, aus einer Zeitdifferenz zwischen einem Empfangszeitpunkt eines Lichtpulses und einem Aussendezeitpunkt dieses Lichtpulses eine Entfernung des zu vermessenden Objekts zu bestimmen.

Ein gattungsgemäßes Verfahren und ein gattungsgemäßer optoelektronischer Sensor sind beispielsweise in EP 0 782 007 A2 beschrieben.

Optoelektronische Sensoren zur berührungslosen Distanzmessung werden je nach genutztem Verfahren in verschiedene Kategorien eingeteilt.

Eine erste Möglichkeit, Entfernungen sehr präzise zu messen, besteht darin, die Phasenlage von ausgesandter und empfangener Welle zu messen. Bei diesem Verfahren werden von einer Laserdiode Sinuswellen ausgesendet. Durch den Vergleich der Phasenlage der ausgesendeten Welle mit der Phasenlage der empfangenen Welle kann die Entfernung bestimmt werden.

Im Unterschied dazu werden bei Pulslaufzeitverfahren von einer Lichtquelle kurze Pulse ausgesendet. Durch die Messung der Laufzeit zwischen dem Aussenden des Pulses und dem Nachweis des reflektierten Lichts kann die Entfernung des reflektierenden Objekts bestimmt werden. Auf dieses Verfahren und die dazugehörige Vorrichtung bezieht sich die vorliegende Erfindung.

Die Genauigkeit der Entfernungsmessung hängt entscheidend davon ab, wie genau der Empfangszeitpunkt des Echopulses bestimmt werden kann. Als Echopuls wird hierbei ein Lichtpuls bezeichnet, der von einem zu vermessenden Objekt im Erfassungsbereich zurückgestrahlt und in der Empfangseinheit nachgewiesen wird. Herkömmliche Pulsverfahren senden einen Einzelpuls und bestimmen die Lage des daraufhin empfangenen Echopulses. Dabei wird der Echopuls durch eine Komparatorschwelle von Störsignalen unterschieden. Das funktioniert nur dann zuverlässig, wenn die Störsignale unterscheidbar kleiner sind als die kleinsten aufzulösenden Echopulse.

Problematisch ist das Auftreten von Objekten mit stark unterschiedlichen Reflektivitäten, die entsprechend stark variierende Amplituden der Echopulse auf der Empfangseinheit zur Folge haben. Auch die Anstiegsgeschwindigkeiten des Echosignals sind für unterschiedliche Amplituden des Echosignals unterschiedlich. Ein nahes Objekt hoher Reflektivität, wie z.B. ein Tripelreflektor, der auch als kooperatives Ziel bezeichnet wird, einerseits und ein fernes Objekt geringer Reflektivität andererseits unterscheiden sich in der Praxis hinsichtlich der von den Objekten remittierten Intensität und damit der Echosignalamplitude um Größenordnungen bis zu einem Faktor 1 Million oder mehr. Eine Empfangseinheit, die diesen Dynamikbereich abdecken soll, wird bei hohen Echoamplituden zwangsläufig übersteuern.

Die Bestimmung des Empfangszeitpunktes mittels einer Komparatorschwelle ist somit abhängig von der Anstiegsgeschwindigkeit und der Signalamplitude des Echosignals, wie z. B. in EP 0 782 007 A2.

EP 0 782 007 A2 zeigt, dass durch die Messung mittels zweier Schwellen an der ansteigenden Flanke die Anstiegsgeschwindigkeit des Empfangssignals bestimmt werden kann und eine genauere Laufzeitmessung möglich wird. EP 0 782 007 A2 beschreibt eine Methode und ein Verfahren zur Laufzeitmessung mittels Messung des Zeitintervalls zwischen dem Überschreiten der Schwelle (ansteigende Flanke des Empfangssignals) und dem Unterschreiten der Schwelle bei der fallenden Flanke. Anhand des gemessenen Zeitintervalls wird eine Korrektur bestimmt. Nachteilig ist dabei, dass mehrere Zeitmessungen kurz aufeinanderfolgend mit sehr hoher Genauigkeit im Pikosekunden-Bereich und unterschiedlichen Schwellen durchgeführt werden müssen. Die Bestimmung des Zeitintervalls zwischen Über- und Unterschreiten der Schwelle an der ansteigenden bzw. fallenden Flanke des Echosignals funktioniert nicht bei Übersteuerung des Empfängers.

Die Reflektivität eines nachzuweisenden Objekts kann die gemessene Laufzeit also in der Weise verändern, dass ein stark reflektierendes Objekt zu einem früheren Auslösen und ein schwach reflektierendes Objekt zu einem späteren Auslösen des Empfängers führt. Dieser sogenannte Amplitudenfehler kann durch Erfassen der Pulsenergie beziehungsweise der Pulsbreite errechnet und von der gemessenen Laufzeit subtrahiert werden. Dieses Verfahren ist unter dem Begriff der Amplitudenkompensation bekannt.

Bei einem alternativen Ansatz wird mit einem optischen Helligkeitsregler, beispielsweise einem Blendenrad, die Amplitude der Empfangspulse konstant gehalten. Das ist aber aufwändig und auch im Hinblick auf die Regelgeschwindigkeit beschränkt.

Ein wesentliches Problem der oben beschriebenen herkömmlichen Amplitudenkompensation ist also zunächst, dass der Dynamikbereich der verfügbaren Empfänger nicht ausreichend ist. In diesem Zusammenhang spielt eine Rolle, dass die Pulsbreite bei übersteuerten Empfängern instabil und insbesondere temperaturabhängig ist. Von Bedeutung ist auch, dass die Pulsbreite im übersteuerten Empfänger nicht stetig mit dem Empfangspegel ansteigt. Eine eindeutige Zuordnung zwischen Pulsbreite und Messfehler ist deshalb jedenfalls nicht mit der gewünschten Genauigkeit möglich.

Weiterhin können Mehrfachreflexionen zwischen dem Sensor und einem Objekt bei bestimmten Kombinationen von Entfernungen des Objekts und Pulsbreiten einer exakten Bestimmung der Pulsbreiten entgegenstehen.

Ungünstig ist schließlich auch, dass die fallenden Flanken der Empfangssignale in der Regel deutlich stärker verrauscht sind als die ansteigenden Flanken. Die Pulsbreite und somit auch die Korrekturwerte weisen deshalb ein vergleichsweise hohes Rauschen auf und Korrekturen mit diesen verrauschten Werten führen zu entsprechend verrauschten Messwerten.

G. ZHOU ET AL: "IMPROVEMENT ON TIMING ACCURACY OF LIDAR FOR REMOTE SENSING", ISPRS - INTERNATIONAL ARCHIVES OF THE PHOTOGRAMMETRY, REMOTE SENSING AND SPATIAL INFORMATION SCIENCES, Bd. XLII-3, 2. Mai 2018 (2018-05-02), Seiten 2495-2498, XP055624496, DOI: 10.5194/isprs-archives-XLII-32495-2018, befasst sich mit der Auswertung der ansteigenden Flanke von Empfangspulsen. Dabei werden die Empfangspulse jeweils mit unterschiedlichen Verstärkungen verstärkt und für die so erhaltenen verstärkten Empfangspulse werden dann Korrekturverfahren beschrieben.

EP 2 315 053 A2 beschreibt eine Anordnung, bei der die Empfangspulse mit einem Strahlteiler aufgeteilt werden in Teilpulse mit unterschiedliche Energie. Die jeweiligen Teilpulse werden dann in unterschiedlichen Empfangskanälen nachgewiesen.

JP H11 23710 A) offenbart eine Anordnung, bei der die Empfangspulse mit einer Kaskade von Strahlteilern aufgeteilt werden. Die Teilpulse werden sodann in jeweils separaten Detektionskanälen nachgewiesen. Bei der Detektion werden die Peakhöhen der Empfangspulse und aus der Peakhöhe eines Pulses wird ein Korrekturwert bestimmt.

Als eine Aufgabe der vorliegenden Erfindung kann angesehen werden, ein Verfahren zur Bestimmung der Entfernung von Objekten und einen optoelektronischen Sensor hierzu anzugeben, bei dem eine besonders hohe Genauigkeit erreicht werden kann.

Diese Aufgabe wird im Hinblick auf das Verfahren durch das Verfahren mit den Merkmalen 1 gelöst. Bezüglich der Vorrichtung wird das Verfahren durch den optoelektronischen Sensor mit den Merkmalen des Anspruchs 9 gelöst.

Das Verfahren der oben angegebenen Art ist erfindungsgemäß dadurch weitergebildet, dass die zurückgestrahlten Lichtpulse vor der Detektion in der Empfangseinheit aufgeteilt werden jeweils in einen ersten Lichtpuls und einen zweiten Lichtpuls, wobei insbesondere der erste Lichtpuls im Vergleich zu dem zweiten Lichtpuls eine unterschiedliche Energie aufweist, dass die ersten Lichtpulse in einem ersten Detektionskanal der Empfangseinheit detektiert werden, dass die zweiten Lichtpulse in einem zweiten Detektionskanal der Empfangseinheit detektiert werden, und dass abhängig von Differenzen der für die ersten Lichtpulse und die zweiten Lichtpulse gemessenen Empfangszeitpunkte die Empfangszeitpunkte mit einem Korrekturwert korrigiert werden. Der optoelektronische Sensor der oben angegebenen Art ist erfindungsgemäß dadurch weitergebildet, dass zum Aufteilen der zurückgestrahlten Lichtpulse vor der Detektion eine Strahlteilereinrichtung vorhanden ist, die die zurückgestrahlten Lichtpulse jeweils in einen ersten Lichtpuls und einen zweiten Lichtpuls aufteilt, wobei insbesondere der erste Lichtpuls im Vergleich zu dem zweiten Lichtpuls eine unterschiedliche Energie aufweist, dass die Empfangseinheit einen ersten Detektionskanal zum Nachweisen der ersten Lichtpulse und einen zweiten Detektionskanal zum Nachweis der zweiten Lichtpulse aufweist und dass die Steuer- und Auswerteeinheit dazu eingerichtet ist, abhängig von Differenzen der für die ersten Lichtpulse und die zweiten Lichtpulse gemessenen Empfangszeitpunkte die Empfangszeitpunkte mit einem Korrekturwert zu korrigieren. Bei dem erfindungsgemäßen optoelektronischen Sensor ist bevorzugt die Steuer- und Auswerteeinheit dazu eingerichtet, das Verfahren mit dem optoelektronischen Sensor durchzuführen.

Vorteilhafte Varianten des erfindungsgemäßen Verfahrens und bevorzugte Ausgestaltungen werden im Folgenden, insbesondere im Zusammenhang mit den abhängigen Ansprüchen und den beigefügten Figuren, erläutert.

Als ein wesentlicher Grundgedanke der Erfindung kann angesehen werden, anstatt Lichtpulse mit nur einer Pulshöhe oder Pulsenergie zu vermessen, die zurückgestrahlten Lichtpulse in jeweils einen ersten, beispielsweise stärkeren, und einen zweiten, beispielsweise schwächeren, Lichtpuls aufzuteilen und sodann den ersten und den zweiten Lichtpuls jeweils in einem separaten Detektionskanal zu vermessen. Dieses Verfahren kann als äquivalent dazu angesehen werden, Messungen bei verschiedenen Pulsenergien der Sendepulse durchzuführen. Diesem Grundgedanken liegt die Erkenntnis zugrunde, dass beim Vermessen von Lichtpulsen mit mindestens zwei verschiedenen Pulsenergien, selbst wenn nur die ansteigende Flanke der Pulse für die Messung verwendet wird, zusätzliche Information über die Steilheit der Flanke erhalten werden kann.

Mit dem erfindungsgemäßen Verfahren können Ungenauigkeiten, die aus der Amplitude eines empfangenen Lichtpulses resultieren, mit besonders guter Genauigkeit korrigiert werden und insgesamt kann dadurch die Genauigkeit der Entfernungsmessung durch Laufzeitmessung deutlich gesteigert werden.

Das Messen des Empfangszeitpunkts von empfangenen Lichtpulsen mit mindestens zwei verschiedenen Pulsenergien, nämlich der Pulsenergie des ersten Lichtpulses und der Pulsenergie des zweiten Lichtpulses, unter Verwendung einer einzigen Komparatorschwelle ist im Prinzip äquivalent zu einem Vermessen der ansteigenden Flanke der empfangenen Lichtpulse mit einer einzigen Pulsenergie und Verwendung von zwei verschiedenen Komparatorschwellen. Das erfindungsgemäße Aufteilen der empfangenen Lichtpulse in einen ersten Lichtpuls und einen von dem ersten in seiner Pulsenergie verschiedenen zweiten Lichtpuls hat aber den Vorteil, dass die Verhältnisse der Pulsenergien des ersten Lichtpulses und des zweiten Lichtpulses deutlich größer gewählt werden können, als die Verhältnisse von zwei verschiedenen Komparatorschwellen. Das bedeutet im Ergebnis, dass die Anstiegszeit des empfangenen Lichtpulses deutlich genauer aufgelöst und in einem höheren Dynamikbereich erfasst werden kann.

Wesentliche Vorteile der Erfindung ergeben sich aus dem Umstand, dass ausschließlich die steigende Flanke der empfangenen Lichtpulse zur Bestimmung der Laufzeit und der Korrekturwerte herangezogen wird.

Die Messung der Empfangszeitpunkte von Lichtpulsen mit unterschiedlicher Pulshöhe, nämlich der ersten Lichtpulse, die in dem ersten Detektionskanal nachgewiesen werden, und der zweiten Lichtpulse, die in dem zweiten Detektionskanal nachgewiesen werden, liefert im Prinzip eine Information über die Anstiegszeit und damit auch über die Pulshöhen oder Pulsenergien der verwendeten Lichtpulse. Für die hier angestellten Betrachtungen hängen die Größen Anstiegszeit, Pulshöhe und Pulsenergie funktional monoton miteinander zusammen. Wenn daher von einer Messung der Anstiegszeit gesprochen wird, ist damit vom Prinzip auch eine Messung der Pulshöhe und der Pulsenergie mit umfasst und gemeint.

Da ausschließlich die ansteigende Flanke, also die qualitativ gut definierte Flanke der empfangenen Lichtpulse, zur Ermittlung der Laufzeit und der Pulsenergien herangezogen wird, liefert das erfindungsgemäße Verfahren sehr hochwertige Messdaten. Die gemessenen Pulsenergien und die auf dieser Grundlage ermittelten Korrekturwerte weisen eine sehr geringe Temperaturabhängigkeit auf, weil sich die temperaturbedingten Einflussgrößen, insbesondere durch die Subtraktion von Rohmesswerten, eliminieren lassen. Das erfindungsgemäße Verfahren ist deshalb auch für einfache Empfänger mit geringer Bandbreite gut geeignet.

Die Differenz der für die ersten Lichtpulse, die in dem ersten Detektionskanal nachgewiesen werden, und die zweiten Lichtpulse, die in dem zweiten Detektionskanal nachgewiesen werden, gemessenen Empfangszeitpunkte wird für die Zwecke der vorliegenden Beschreibung auch als Delta-Amplitude bezeichnet.

Empfänger mit geringer Bandbreite profitieren von einer höheren Auflösung der Delta-Amplitude. Die gemessene Delta-Amplitude wird deutlich weniger durch eine Dämpfung im Signalweg, beispielsweise durch eine verschmutzte Frontscheibe des optoelektronischen Sensors, beeinflusst.

Die Anforderungen an den Empfänger sind auch deshalb deutlich geringer als bei Verfahren, welche eine herkömmliche Amplitudenkompensation nutzen, weil das Verhalten des Empfängers mit zunehmender Übersteuerung praktisch irrelevant ist. Grund hierfür ist, dass sich ein möglicherweise schlecht definierter und insbesondere nichtstetiger Zusammenhang zwischen Pulsenergie und Pulsbreite nicht mehr auf die Messgenauigkeit auswirkt. Für das Design des Empfängers ist es demgemäß ausreichend, sich ausschließlich auf die Optimierung der steigenden Flanke zu konzentrieren.

Die Pulsenergie wird bei dem erfindungsgemäßen Verfahren im Prinzip mit derselben Messgenauigkeit erfasst, wie die Signallaufzeit selbst. Der Messwert wird nicht durch einen unzureichenden Korrekturwert verschlechtert. Weil außerdem Reflexionen zeitlich gesehen frühestens nach dem ersten Eintreffen des Lichts am elektrooptischen Sensor auftreten können, können auch Mehrfachreflexionen keine nachteilige Rolle mehr spielen. Das erfindungsgemäße Verfahren ist deshalb absolut immun gegen Mehrfachreflexionen.

Das erfindungsgemäße Verfahren hat außerdem den Vorteil, dass sich das hier vorgeschlagene Kompensationsverfahren nicht wie die auf einer Pulsweitenmessung beruhende herkömmliche Amplitudenkompensation an dem Signalpegel zur Kompensation des Entfernungsfehlers orientiert, sondern an einem Laufzeitfehler selbst. Das führt dazu, dass die Differenzen der Empfangszeitpunkte für die ersten Lichtpulse und die zweiten Lichtpulse bei schwachen Signalpegeln besonders groß sind. Der dadurch verursachte Entfernungsfehler hingegen ist vergleichsweise klein.

Von Bedeutung ist außerdem, dass der Verlauf der Delta-Amplitude für schwache Signalpegel vergleichsweise flach ist, sodass bei Korrektur von schwachen Signalen die Messunsicherheit dieser Korrektur ebenfalls relativ gering ist. Auch in diesem Zusammenhang werden im Vergleich zur vergleichsweise deutlich steileren Kennlinie der Pulsweiten-Amplitudenkompensation deutliche Verbesserungen erreicht.

Grundsätzlich kann ein Korrekturwert mit Hilfe einer Korrekturfunktion oder -tabelle in Abhängigkeit der Amplitude des Echosignals, also der Amplitude oder Energie eines empfangenen Lichtpulses, bestimmt werden.

Grundsätzlich können die Empfangszeitpunkte für die ersten Lichtpulse oder die Empfangszeitpunkte für die zweiten Lichtpulse als Ausgangspunkt für die Korrektur dienen.

Prinzipiell kommt es für die Verwirklichung des erfindungsgemäßen Verfahrens darauf an, dass einem empfangenen Lichtpuls, insbesondere einem ersten Lichtpuls, der in dem ersten Detektionskanal nachgewiesen wird, und einem zweiten Lichtpuls, der in dem zweiten Detektionskanal nachgewiesen wird, in einer definierten Weise ein Empfangszeitpunkt zugeordnet wird. Erfindungsgemäß wird als Empfangszeitpunkt derjenige Zeitpunkt gewertet, zu dem eine ansteigende Flanke eines detektierten Lichtpulses eine Schwelle durchstößt.

Die Korrektur der gemessenen Empfangszeitpunkte kann prinzipiell durch eine Multiplikation mit einem Korrekturfaktor erfolgen. Erfindungsgemäß wird der Empfangszeitpunkt mit einem zu subtrahierenden Korrekturwert korrigiert wird. Ein solcher Korrekturwert wird als additiver Korrekturwert bezeichnet. Damit sind auch negative also zu subtrahierende Werte gemeint. Prinzipiell kann dabei sowohl der Empfangszeitpunkt der ersten Lichtpulse oder der Empfangszeitpunkt der zweiten Lichtpulse als Ausgangspunkt für die Korrektur verwendet werden.

Kombinationen einer Multiplikation mit einem Korrekturfaktor und einem additiven Korrekturwert sind ebenfalls möglich.

Erfindungsgemäß wird Differenzen der für die ersten Lichtpulse und die zweiten Lichtpulse gemessenen Empfangszeitpunkte ein, insbesondere von einem der Empfangszeitpunkte, also dem Empfangszeitpunkt der ersten Lichtpulse oder dem Empfangszeitpunkt der zweiten Lichtpulse, zu subtrahierender Korrekturwert zugeordnet. Im Hinblick auf den prinzipiell zu definierenden Nullpunkt der Entfernungsmessung relativ zum optoelektronischen Sensor sind die Korrekturwerte nur bis auf eine grundsätzlich frei wählbare additive Konstante festgelegt.

Für verschiedene Differenzen der für die ersten Lichtpulse, die in dem ersten Detektionskanal nachgewiesen werden, und die zweiten Lichtpulse, die in dem zweiten Detektionskanal nachgewiesen werden, gemessenen Empfangszeitpunkte werden die Korrekturwerte erfindungsgemäß durch Kalibrierungsmessungen gewonnen. Solche Messungen können beispielsweise werkseitig vor der Auslieferung eines erfindungsgemäßen optoelektronischen Sensors an einen Kunden, gegebenenfalls aber auch im laufenden Messbetrieb durchgeführt werden.

Insbesondere können Kalibrierkurven ermittelt werden, die jedem Paar von Empfangszeitpunkten, die für ein bestimmtes Paar eines ersten Lichtpulses und eines zweiten Lichtpulses gewonnen werden, einen Korrekturwert zuordnen.

Für die Verwirklichung des erfindungsgemäßen Verfahrens ist es ausreichend, wenn die empfangenen Lichtpulse in einen ersten Lichtpuls und einen zweiten Lichtpuls mit jeweils unterschiedlichen Pulsenergien aufgeteilt werden und diese Teilpulse vermessen werden. Die Informationsbasis zur Ermittlung von geeigneten Korrekturwerten kann gesteigert werden bei Varianten des erfindungsgemäßen Verfahrens, bei denen Kalibrierkurven ermittelt werden für unterschiedliche Abstände der Pulsenergien des ersten Lichtpulses und des zweiten Lichtpulses.

Weitere Verbesserungen des erfindungsgemäßen Verfahrens können erreicht werden bei Varianten des Verfahrens, die dadurch gekennzeichnet sind, dass vor einer Messung unterschiedliche Pulsenergien des ersten Lichtpulses und des zweiten Lichtpulses und unterschiedliche Abstände der Pulsenergien der gesendeten Lichtpulse für ein zu vermessendes Objekt getestet werden und dass die Messung mit einer Pulsenergie der gesendeten Lichtpulse und einem Abstand der Pulsenergien des ersten Lichtpulses und des zweiten Lichtpulses durchgeführt wird, bei denen gemäß den Kalibrierkurven eine möglichst geringe Messunsicherheit erreicht wird.

Grundsätzlich kann auch von Vorteil sein, wenn auch die Messungen selbst mit mehreren verschiedenen Paaren von verschiedenen Pulsenergien des ersten Lichtpulses und des zweiten Lichtpulses durchgeführt werden.

Wenngleich, wie oben erläutert, die erfindungsgemäße Verwendung von Lichtpulsen mit unterschiedlicher Pulsenergien Vorteile aufweist im Vergleich zu Messungen mit verschiedenen Schwellen, hat die Messung mit verschiedenen Schwellen jedenfalls den Vorteil, dass die Messwerte simultan generiert werden und die Messung als solche deshalb schneller ist. Diesen Vorteil kann man sich zu Nutze machen bei Varianten des erfindungsgemäßen Verfahrens, bei denen die detektierten Lichtpulse mit mehr als einer Schwelle verglichen werden.

Grundsätzlich ist aber auch möglich, dass die Pulsenergien der gesendeten Lichtpulse in einem Messzyklus variiert werden und insbesondere die Abstände der Pulsenergien des ersten Lichtpulses und des zweiten Lichtpulses in einem Messzyklus in einer Rampe hochgefahren werden, gemäß einer Dreiecksfunktion und/oder gemäß einer Sägezahnfunktion variiert werden. Hierdurch kann die ansteigende Flanke der empfangenen Lichtpulse noch genauer vermessen und die gemessenen Entfernungswerte können noch genauer korrigiert werden.

Als Strahlteilereinrichtung können im Prinzip bekannte Komponenten, wie Strahlteilerspiegel, also halbdurchlässige Spiegel, verwendet werden. Grundsätzlich kann beispielsweise ein Glasplättchen die gewünschte Strahlteilerfunktion realisieren.

Im Hinblick auf die Datenauswertung ist es bevorzugt, wenn der erste Detektionskanal und der zweite Detektionskanal strahlabwärts von der Strahlteilereinrichtung identisch ausgebildet sind. Dadurch wird der Vorteil erreicht, dass die beiden Detektionskanäle im Wesentlichen denselben Temperaturgang aufweisen. Beispielsweise können die Empfängerelemente, zum Beispiel Photodioden, die Vorverstärker und weitere elektronische Komponenten identisch gebildet sein.

Grundsätzlich sind aber auch Varianten des erfindungsgemäßen Verfahrens und des erfindungsgemäßen optoelektronischen Sensors möglich, bei denen der erste Lichtpuls und der zweite Lichtpuls im Wesentlichen dieselbe Pulsenergie aufweisen und dafür, um die gewünschte Information über die Anstiegsflanke zu gewinnen, der erste Detektionskanal und der zweite Detektionskanal unterschiedlich gebildet sind. Beispielsweise kann die Verstärkung des ersten Detektionskanals geeignet unterschiedlich, beispielsweise deutlich größer, gewählt werden im Vergleich zu Verstärkung des zweiten Detektionskanals.

Bei besonders bevorzugten Ausführungsbeispielen des erfindungsgemäßen optoelektronischen Sensors ist die Strahlteilereinrichtung variierbar gebildet dergestalt, dass das Verhältnis der Pulsenergie des ersten Lichtpulses im Vergleich zu derjenigen des zweiten Lichtpulses variiert werden kann. Beispielsweise kann es sich um einen Strahlteilerspiegel handeln, der mit in einer Raumkoordinate des Spiegels graduell variierenden spiegelnden Beschichtung gebildet ist. Durch mechanisches Verschieben kann dann das Verhältnis der Pulsenergien des ersten Lichtpulses und des zweiten Lichtpulses verstellt werden.

Weitere Vorteile und Merkmale der Erfindung werden im Folgenden mit Bezug auf die beigefügten schematischen Figuren erläutert. Hierin zeigen:
- Figur 1:: eine schematische Ansicht eines gattungsgemäßen optoelektronischen Sensors;
- Figur 2:: ein schematisches Diagramm zur Erläuterung des gattungsgemäßen Messprinzips;
- Figur 3:: schematische Diagramme zur Erläuterung des erfindungsgemäßen Messprinzips;
- Figur 4:: ein weiteres schematisches Diagramm zur Erläuterung des erfindungsgemäßen Messprinzips;
- Figur 5: eine schematische Ansicht zur Erläuterung eines erfindungsgemäßen optoelektronischen Sensors;
- Figur 6:: ein Diagramm mit experimentell bestimmten Kalibrierkurven für einen erfindungsgemäßen optoelektronischen Sensor;
- Figur 7:: ein Diagramm mit einer experimentell bestimmten Kalibrierkurve aus dem Stand der Technik; und
- Figur 8:: eine Teilansicht eines erfindungsgemäßen optoelektronischen Sensors zur Erläuterung der Empfangseinheit.

Gleiche und gleichwirkende technische Komponenten sind in den Figuren in der Regel jeweils mit denselben Bezugszeichen versehen.

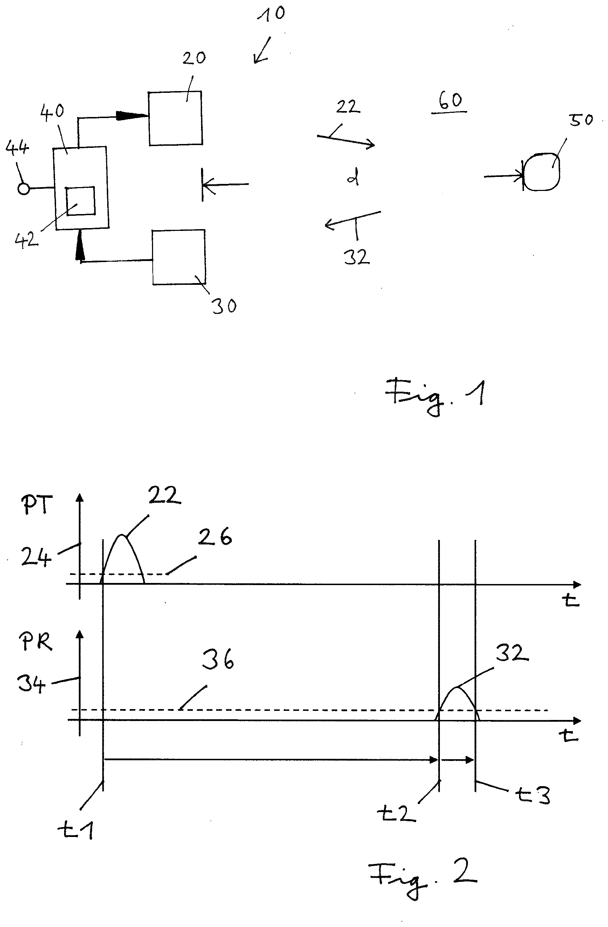

Der in Figur 1 dargestellte gattungsgemäße optoelektronische Sensor 10 zum Messen einer Entfernung d von Objekten 50 weist als wesentliche Komponenten eine Sendeeinheit 20 zum Aussenden von Lichtpulsen 22 in einen Erfassungsbereich 60, eine Empfangseinheit 30 zum Detektieren von zurückgestrahlten Lichtpulsen 32, die von einem zu vermessenden Objekt 50 im Erfassungsbereich 60 zurückgestrahlt werden, und eine Steuer- und Auswerteeinheit 40 auf.

Die Steuer- und Auswerteeinheit 40 dient zum Ansteuern der Sendeeinheit 20 und zum Auswerten der von der Empfangseinheit 30 detektierten Lichtpulse 32 und ist außerdem dazu eingerichtet, aus einer Zeitdifferenz zwischen einem Empfangszeitpunkt t2 eines von dem Objekt 50 zurückgestrahlten Lichtpulses 32 und einem Aussendezeitpunkt t1 dieses Lichtpulses 22 eine Entfernung d des zu vermessenden Objekts 50 zu bestimmen. Dieses grundlegende Messprinzip wird im Zusammenhang mit Figur 2 näher beschrieben.

In dem in Figur 2 oben gezeigten Diagramm ist die Sendeleistung PT (vertikale Achse 24) einer Lichtquelle der Sendeeinheit 20, typischerweise eine Laserdiode, gegen die Zeit t aufgetragen. Das in Figur 2 unten dargestellte Diagramm zeigt die in der Empfangseinheit 30 von einem Empfänger, typischerweise eine Fotodiode, gemessene Empfangsleistung PR (vertikale Achse 34) in Abhängigkeit der Zeit t.

Für die grundlegende Messaufgabe, die Laufzeit eines Lichtpulses zu bestimmen, müssen im Grundsatz zwei Zeitpunkte gemessen werden, nämlich der Startzeitpunkt und der Empfangszeitpunkt.

Eine Messung beginnt mit dem Aussenden eines Lichtpulses 22, der in Figur 2 durch einen pulsartigen Verlauf der Sendeleistung PT wiedergegeben ist. Als Startpunkt der Zeitmessung wird in dem gezeigten Beispiel derjenige Zeitpunkt t1 auf der ansteigenden Flanke des Pulses 22 gewählt, zu dem die Flanke eine gewählte Schwelle 26 durchstößt. Elektronisch kann das beispielsweise realisiert werden, indem ein Strom, mit welchem eine Laserdiode angesteuert wird, abgefragt wird. Weil der Strom durch eine Laserdiode üblicherweise einen vergleichsweise definierten und reproduzierbaren Verlauf aufweist, ist der Startpunkt für die Zeitmessung vergleichsweise gut definiert.

Anspruchsvoller ist die Situation beim Messen des Empfangspulses, wesentlich deshalb, weil die Lichtpulse im praktischen Messbetrieb von optisch sehr unterschiedlichen Objekten reflektiert werden und darüber hinaus in der Regel eine Vielzahl von Grenzflächen, wie beispielsweise eine Frontscheibe des Sensors, durchlaufen. Die Lichtpulse sind deshalb im Verlauf ihres Wegs vom Sender über das Objekt zum Empfänger einer Vielzahl von nicht genau definierten Beeinflussungen unterworfen und werden durch diese in der Pulshöhe und der Pulsbreite verändert.

Um in diesem Zusammenhang eine Korrekturmöglichkeit bereitzustellen, wird bei der in Figur 2 im unteren Diagramm dargestellten Situation nicht nur ein Empfangszeitpunkt gemessen, sondern es wird zunächst derjenige Zeitpunkt t2 ermittelt, zu dem eine ansteigende Flanke des Empfangspulses 32 eine gewählte Schwelle 36 durchstößt und außerdem wird der Zeitpunkt t3 gemessen, an dem die abfallende Flanke des Empfangspulses 32 die Schwelle 36 durchstößt. Es ist unmittelbar ersichtlich, dass bei höheren und breiteren Pulsen der Zeitpunkt t2 im Diagramm der Figur 2 nach links und der Zeitpunkt t3 entsprechend nach rechts wandert. In dem durch die Messung diese beiden Zeitpunkte bereitgestellt werden, erhält man eine Information über die Pulsbreite, die für eine Korrektur der Zeitmessung verwendet werden kann.

Die Zeitmessung als solche, also die Messung der Zeit zwischen den Zeitpunkten t2 und t1 beziehungsweise den Zeitpunkten t3 und t1 erfolgt mit grundsätzlich bekannten Mitteln.

Verbesserungsbedarf besteht im Hinblick auf die Messung des Zeitpunkts t3, also des Zeitpunkts, zu dem die abfallende Flanke des Empfangspulses 32 die Schwelle 36 durchstößt. Weil die abfallende Flanke des Empfangspulses wegen der Vielzahl der beschriebenen Beeinflussungen des Pulses vergleichsweise schlecht definiert ist, ist auch die Messung dieses Zeitpunkts relativ ungenau.

Ein erster wesentlicher Ansatz der vorliegenden Erfindung kann darin gesehen werden, dass zur Bestimmung des Empfangszeitpunkts eines Lichtpulses nur noch die vergleichsweise viel besser definierte ansteigende Flanke des Empfangspulses herangezogen wird. Ausgehend von dem weiteren wesentlichen Befund, dass die Messung eines einzigen Zeitpunkts allein keine hinreichende Information über den Empfangszeitpunkt des Lichtpulses liefern kann, besteht die wesentliche Idee der vorliegenden Erfindung darin, anstelle von Lichtpulsen mit nur einer Pulshöhe oder einer Pulsenergie, Lichtpulse mit mindestens zwei verschiedenen Pulshöhen oder Pulsenergien zu verwenden. Hierzu werden gemäß einem weiteren wesentlichen Gedanken der vorliegenden Erfindung die Empfangspulse aufgeteilt jeweils in einen ersten Lichtpuls und einen zweiten Lichtpuls, die jeweils unterschiedliche Pulsenergien aufweisen.

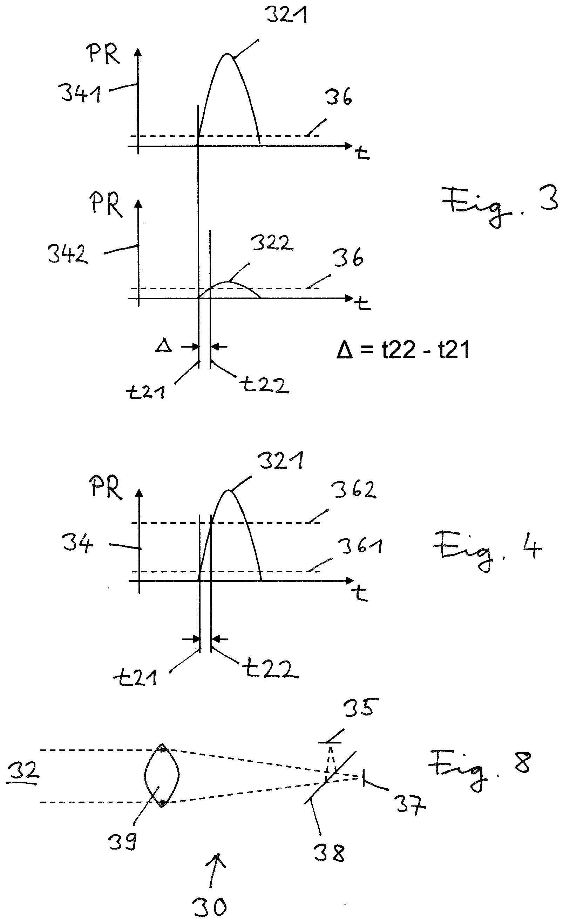

Dieses grundlegende Prinzip der Erfindung wird mit Bezug auf Figur 3 erläutert. In den beiden in Figur 3 dargestellten Diagrammen ist jeweils, wie in Figur 2 unten, die Empfangsleistung PR gegen die Zeit t aufgetragen. Figur 3 zeigt im oberen Diagramm (vertikale Achse 341) einen ersten (stärkeren) Lichtpuls 321 und im unteren Diagramm (vertikale Achse 342) einen zweiten (schwächeren) Lichtpuls 322 aufgetragen jeweils gegen die Zeit (horizontale Achse t). Der erste Lichtpuls 321 und der zweite Lichtpuls 322 sind in dem Sinn gleichzeitig, als sie von ein und demselben Empfangspuls 32 durch Strahlteilung hervorgehen. In der Praxis werden die Maxima des ersten Lichtpulses 321 und des zweiten Lichtpulses 322 wohl im Wesentlichen gleichzeitig sein. Es kommt darauf aber nicht an, weil die Position der Maxima nicht gemessen wird. Bei Verwendung von ein und derselben Schwelle 36 durchstößt die ansteigende Flanke des stärkeren ersten Lichtpulses 321 die Schwelle 36 zu einem früheren Zeitpunkt t21 als der schwächere zweite Lichtpuls 322, der die Schwelle 36 erst danach zu einem mit t22 bezeichneten Zeitpunkt durchstößt.

Die vorliegende Erfindung hat erkannt, dass in den unterschiedlichen Zeitpunkten t21 und t22 eine Information über die Steilheit der ansteigenden Flanke beispielsweise des stärkeren ersten Lichtpulses 321 enthalten ist. Einsichtig wird das, wenn man sich gedanklich vergegenwärtigt, dass bei gleich bleibendem zweitem Lichtpuls 322 die Differenz zwischen den Zeitpunkten t22 und t21 umso größer wird, je steiler die Flanke des ersten Lichtpulses 321 ist.

Bei dem erfindungsgemäßen Verfahren werden also im Prinzip eine erste Messung der Pulslaufzeit durchgeführt mit einem ersten Lichtpuls 321 mit hoher Pulsenergie und eine zweite Messung der Pulslaufzeit mit einem zweiten Lichtpuls 322 mit vergleichsweise schwacher Pulsenergie. Als Maß für die Pulsenergie wird sodann der Laufzeitunterschied zwischen beiden Messungen herangezogen. Eine Besonderheit besteht also bei dem erfindungsgemäßen Verfahren außerdem darin, dass der erste Lichtpuls 321 und der zweite Lichtpuls 322 aus ein und demselben Empfangspuls 32 durch Strahlteilung abgeleitet werden. Die Information über die Pulsenergie, beispielsweise des stärkeren ersten Lichtpulses 321, kann deshalb im Prinzip gleichzeitig mit der Vermessung des ersten Lichtpulses 321 gewonnen werden, weil der erste Lichtpuls 321 und der zweite Lichtpuls 322 prinzipiell gleichzeitig vermessen und ausgewertet werden können.

Dieses Verfahren weist Ähnlichkeiten auf zu einer Messung, bei der die Anstiegszeit der Empfangspulse gemessen wird unter Verwendung von zwei verschiedenen Komparatorschwellen. Hierzu macht man sich klar, dass die Verwendung von Lichtpulsen 321, 322 mit unterschiedlicher Höhe und einer einzigen Schwelle 36 äquivalent ist zur Verwendung nur eines Typs von Lichtpulsen 321, aber zwei unterschiedlichen Schwellen 361, 362. Diese Situation ist in Figur 4 dargestellt. Wie dort ersichtlich durchstößt der Puls 321 die niedrigere Schwelle 361 (die im gezeigten Beispiel gleich hoch sein soll wie die Schwelle 36 aus Figur 3) zum Zeitpunkt t21 und die höhere Schwelle 362 zum Zeitpunkt t22. Die höhere Schwelle 362 ist dabei so gewählt, dass der Zeitpunkt t22 der Figur 4 identisch ist zu dem Zeitpunkt t22 der Figur 3.

Die Anstiegszeit kann man jedoch mit zwei Komparatorschwellen nicht mit der benötigten Auflösung und Genauigkeit ermitteln. Die Gründe hierfür sind, dass die Bandbreite des verwendeten Empfängers die kürzestmögliche Anstiegszeit begrenzt, sodass hohe Pulsenergien nicht mehr unterscheidbar sind. Außerdem steht die begrenzte zeitliche Auflösung der verfügbaren Zeit-Digital-Konverter (TDC) einer Messung mit der gewünschten Genauigkeit entgegen. Schließlich weisen die verfügbaren Empfänger nicht die notwendige Dynamik auf.

Wesentlich für die hier beschriebene Erfindung ist, dass eine Information über die Steilheit der Anstiegsflanke in gewissen Grenzen äquivalent ist zu einer Information über eine Pulsbreite der empfangenen Lichtpulse. Je steiler die Anstiegsflanke des Lichtpulses, umso größer ist dessen Pulsenergie. Die Delta-Amplitude, mithin die Differenz der gemessenen Empfangszeitpunkte, kann damit zur Korrektur der Laufzeiten verwendet werden.

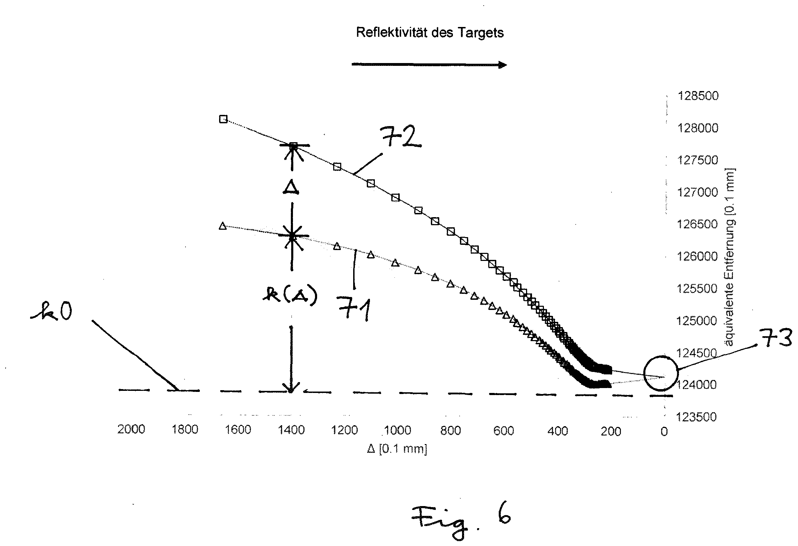

Figur 6 zeigt zwei experimentell aufgenommene Kalibrierkurven 71, 72. Aufgetragen sind jeweils die für Lichtpulse mit hoher Pulsenergie (Kalibrierkurve 71), also beispielsweise die ersten Lichtpulse in der Terminologie der Patentansprüche, beziehungsweise Lichtpulse mit niedriger Pulsenergie (Kalibrierkurve 72), also beispielsweise die zweiten Lichtpulse in der Terminologie der Patentansprüche, gemessenen äquivalenten Entfernungswerte gegen die Differenz Δ dieser Entfernungswerte Die äquivalenten Entfernungswerte sind wegen des Zusammenhangs
Entfernung = Lichtgeschwindigkeit mal Laufzeit direkt proportional zur Laufzeit. Die vertikale Achse ist deshalb äquivalent zu einer Zeitachse.

Die Daten in Figur 6 wurden mit einem Messaufbau gewonnen, bei dem ein reflektierendes Target als Testobjekt in einem gleichbleibenden Abstand relativ zum optoelektronischen Sensor positioniert wurde und die Reflektivität des Targets definiert variiert wurde. In dem in Figur 6 gezeigten Diagramm nimmt die Reflektivität des Testobjekts von links nach rechts kontinuierlich zu. Die Empfangszeitpunkte sowohl der vergleichsweise starken Lichtpulse (Kalibrierkurve 71) als auch der vergleichsweise schwachen Lichtpulse (Kalibrierkurve 72) wandern vom Wert etwa Δ=1600*0,1mm auf der horizontalen Skala bis zum Wert etwa Δ=300*0,1mm auf der horizontalen Skala kontinuierlich in Richtung früherer Empfangszeitpunkte. Das ist einsichtig, denn wegen der von links nach rechts ansteigenden Reflektivität des Testobjekts werden die empfangenen Lichtpulse (sowohl die vergleichsweise starken Lichtpulse (Kalibrierkurve 71) als auch die vergleichsweise schwachen Lichtpulse (Kalibrierkurve 72) im Diagramm in Figur 6 von links nach rechts stärker. Das bedeutet, dass die Anstiegsflanken der empfangenen Lichtpulse jeweils steiler werden und die gewählte Schwelle entsprechend früher durchstoßen.

Die tatsächlichen Messpunkte der Kalibrierkurve 71 für die vergleichsweise starken Lichtpulse sind Figur 6 mit Dreiecken und diejenigen der Kalibrierkurve 2 für die vergleichsweise schwachen Lichtpulse sind mit Quadraten dargestellt. Die Verläufe zwischen diesen Messpunkten wurden interpoliert.

Eine Sondersituation liegt im Bereich zwischen etwa Δ=300*0,1mm und 0 auf der horizontalen Skala vor. Dieser Bereich entspricht dem Regime besonders starker Empfangspulse, bei denen der Empfänger übersteuert wird. Wie aus Figur 6 ersichtlich, reichen die tatsächlichen Messwerte bis etwa zum Wert Δ=200*0,1mm auf der horizontalen Skala.

Eine tatsächliche Entfernung des Testobjekts ist in Figur 6 durch eine horizontale Gerade k0 repräsentiert. Diese tatsächliche Entfernung ist naturgemäß unabhängig von der Reflektivität des Testobjekts. Es ist aber klar, dass die Gerade k0 ihrerseits nur bis auf eine additive Konstante festgelegt ist. Für die tatsächliche exakte Entfernung kommt es darauf an, wo, bezogen auf den optoelektronischen Sensor, der Nullpunkt der Entfernungsmessung festgelegt wird.

Ein wesentlicher Gesichtspunkt des Diagramms in Figur 6 besteht darin, dass einer gemessenen Differenz Δ eindeutig eine Laufzeitkorrektur oder, was äquivalent ist, eine Entfernungskorrektur k(Δ) zugeordnet werden kann. Diese Entfernungskorrektur k(Δ) kann, wie in Figur 6 beispielhaft dargestellt, auf die Kalibrierkurve 71 für die vergleichsweise starken Lichtpulse bezogen werden. Es ist aber äquivalent, wenn für die Entfernungskorrektur die Differenz zwischen der Geraden k0 und der Kalibrierkurve 72 verwendet wird. Eine so gewonnene Entfernungskorrektur müsste dann auf die für die schwachen Lichtpulse gewonnenen Messwerte angewendet werden. Weil k0, wie besprochen, nur bis auf eine additive Konstante festgelegt ist, ist auch die Entfernungskorrektur k(Δ) nur bis auf eine additive Konstante festgelegt.

Ein weiterer wesentlicher Vorteil des erfindungsgemäßen Verfahrens zeigt sich im Zusammenhang mit der Aufnahme der notwendigen Kalibrierkurven. Um Amplituden mit hohem Signalpegel zu erfassen, müssen diese mit einem stark reflektieren Ziel in kurzem Abstand zum elektrooptischen Sensor aufgenommen werden. Bei solchen kurzen Abständen zum Sensor treten jedoch sogenannte optische Nahbereichseffekte und auch ein elektrisches Sender-Empfänger-Übersprechen auf, wodurch die gemessenen Amplitudenfehler nicht ausschließlich der veränderten Amplitude zugeschrieben werden können. Es ist deshalb zwingend notwendig, die Amplitudenkompensation unter Auslassung hoher Amplituden im optischen und elektrischen Fernbereich aufzunehmen. Der nicht erfasste Bereich hoher Amplituden muss anschließend extrapoliert werden.

Im Vergleich zum Stand der Technik, bei dem Pulsbreiten ausgewertet wurden, ergeben sich bei dem erfindungsgemäßen Verfahren Vorteile in dem Regime für sehr starke Lichtpulse, bei denen der Empfänger übersteuert wird. Für das erfindungsgemäße Messprinzip darf angenommen werden, dass die Empfangszeitpunkte, mithin die Zeitpunkte, zu denen die Schwelle 36 durchstoßen wird, für die Kalibrierkurven 71 und 72 im Grenzfall unendlich starker Pulse und damit unendlich steiler Anstiegsflanken auf ein und denselben Empfangszeitpunkt zulaufen. Dieser gemeinsame Punkt, auf den die Kalibrierkurven 71 und 72 aufgrund dieser Überlegung zulaufen müssen, ist in Figur 6 durch den Kreis 73 hervorgehoben. Zwischen den Messpunkten, die für beide Kalibrierkurven 71, 72 bis etwa Δ=200*0,1mm verfügbar sind, und diesem gemeinsamen Punkt, der bei etwa 124100*0,1mm auf der vertikalen Achse lokalisiert ist, kann mit dieser zusätzlichen Annahme interpoliert werden.

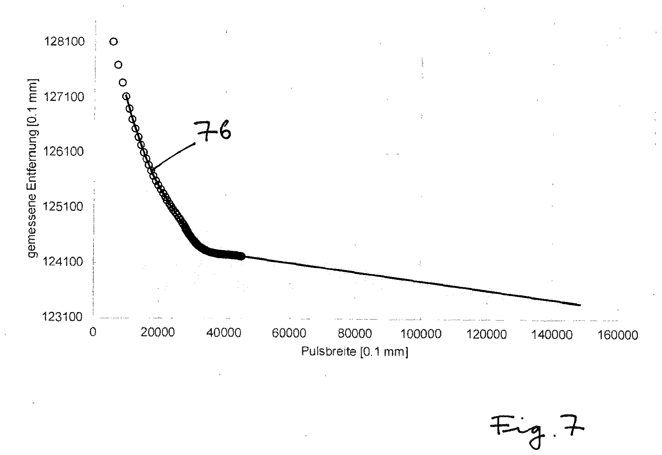

Im Vergleich dazu zeigt Figur 7 eine Kalibrierkurve 76 aus dem Stand der Technik. Aufgetragen ist dort eine gemessene Entfernung (vertikale Achse) gegen die gemessene Pulsbreite. Die Pulsbreite wurde dabei, wie oben erläutert, bestimmt, indem die Zeitpunkte, zu denen die ansteigende Flanke eines empfangenen Lichtpulses und die abfallende Flanke dieses Lichtpulses eine Schwelle durchstoßen, gemessen wurden. Wegen der Übersteuerung der Empfänger bei sehr intensiven Pulsen stehen bei dem Diagramm aus Figur 7 Messwerte nur bis zu einer Pulsbreite von etwa 46000*0,1 mm zur Verfügung. Weil, abweichend zu der Situation der Kalibrierkurven 71, 72 für das erfindungsgemäße Verfahren in Figur 6, keine sinnvolle Annahme für den Verlauf der Kalibrierkurve 76 für Werte der Pulsbreite größer als 50000*0,1mm getroffen werden kann, muss von dem Verlauf in der unmittelbaren Umgebung vor 46000*0,1mm extrapoliert werden. Wegen der bestehenden Messunsicherheiten folgen hieraus, je weiter man sich von 46000*0,1mm entfernt, erhebliche Unsicherheiten dieses extrapolierten Verlaufs. Bei der herkömmlichen Amplitudenkompensation hat man also keinen Anhaltspunkt für die Extrapolation. Je nachdem, welche Messwerte für die Extrapolation herangezogen werden, verändert sich die Steigung und damit der Fehler der Extrapolationsgeraden. Je weiter ein zu kompensierender Amplitudenwert vom letzten gemessenen Wert auf der Extrapolation geraden entfernt ist, desto größer ist auch der Extrapolationsfehler.

Die Erfindung leistet hier, wie im Zusammenhang mit Figur 6 erläutert, erhebliche Verbesserungen, denn je höher bei dem erfindungsgemäßen Verfahren (Delta-Amplituden-Kompensation) die Pulsenergie der empfangenen Lichtpulse ist, desto geringer wird die gemessene Delta-Amplitude, die auch als Delta-Entfernungsdifferenz bezeichnet werden kann. Dieses hat zur Folge, dass die Unsicherheit für die extrapolierten Amplituden maximal so groß werden kann wie die halbe Delta-Entfernungsdifferenz. In Figur 6 beträgt dieser Wert 10 mm. Durch eine einfache lineare Extrapolation liegt dieser Fehler in der Praxis noch viel niedriger und kann insbesondere kleiner sein als 1 mm.

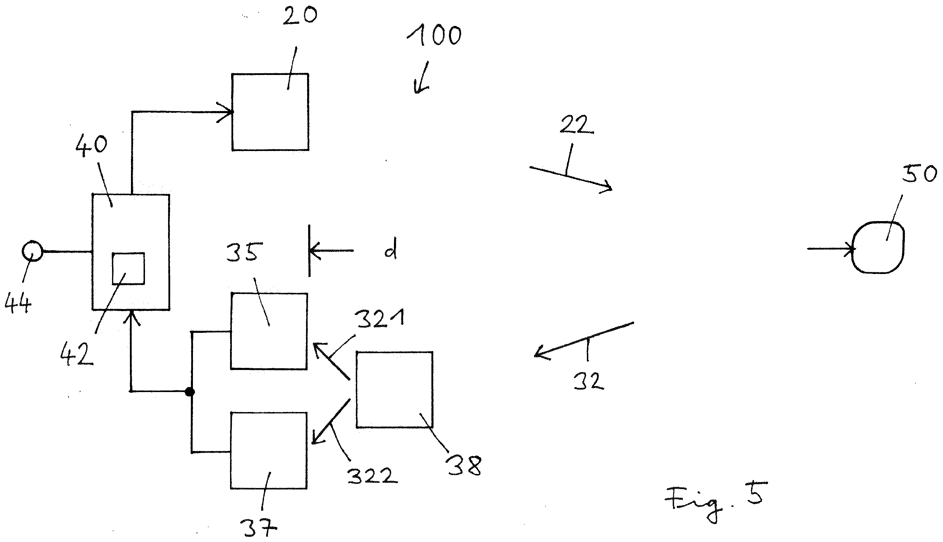

Figur 5 zeigt eine schematische Darstellung eines erfindungsgemäßen optoelektronischen Sensors 100. Der erfindungsgemäße optoelektronische Sensor 100 ist strukturell ähnlich aufgebaut wie ein Sensor aus dem Stand der Technik. Unterschiede bestehen im Bereich der Empfangseinheit 30 und der Steuer- und Auswerteeinheit 40. Die Empfangseinheit 30 weist einen ersten Detektionskanal 35 und einen zweiten Detektionskanals 37 auf. Außerdem ist strahlaufwärts von dem ersten Detektionskanal 35 und dem zweiten Detektionskanals 37 eine Strahlteilereinrichtung 38 vorhanden. In der Strahlteilereinrichtung 38 wird ein einlaufender Empfangslichtpuls 32 aufgeteilt in einen ersten Lichtpuls 321 und einen zweiten Lichtpuls 322. Der erste Lichtpuls 321 wird auf den ersten Detektionskanal 35 und der zweite Lichtpuls 322 auf dem zweiten Detektionskanals 37 geleitet. Hierzu können geeignete und grundsätzlich bekannte optische Mittel, wie Spiegel, Prismen und Linsen, vorhanden sein. Die Steuer- und Auswerteeinheit 40 ist erfindungsgemäß dazu eingerichtet, abhängig von Differenzen der für die ersten Lichtpulse 321 und die zweiten Lichtpulse 322 gemessenen Empfangszeitpunkte t21, t22 die Empfangszeitpunkte mit einem Korrekturwert k(Δ) zu korrigieren. Grundsätzlich ist es eine Definitionsfrage, ob dabei die Empfangszeitpunkte der ersten Lichtpulse 321 oder die Empfangszeitpunkte der zweiten Lichtpulse als Ausgangspunkt für die Korrektur gewählt werden.

Zweckmäßig weist die Steuer- und Auswerteeinheit 40 zum Abspeichern der Kalibrierinformation in der Art der Kalibrierkurven 71, 72 einen Speicher 42 auf.

Zum Ausgeben von Messdaten kann der optoelektronische Sensor 100 eine Schnittstelle 44, beispielsweise eine Busschnittstelle, aufweisen.

Figur 8 zeigt in einer Teilansicht beispielhaft eine Realisierung einer Empfangseinheit 30. In dem in Figur 8 gezeigten Beispiel weist die Empfangseinheit 30 eine Empfangsoptik 39, beispielhaft als Sammellinse dargestellt, einen Spiegel 38 als Strahlteilereinrichtung sowie einen ersten Detektionskanal 35 und einen zweiten Detektionskanal 37 auf. Der erste Detektionskanal 35 und der zweite Detektionskanal 37 können bevorzugt identische Fotodetektoren und identische Vorverstärker aufweisen. Der Spiegel kann beispielsweise ein einfaches Glasplättchen sein. In diesem Fall werden etwa 5 Prozent der eingestrahlten Energie auf den ersten Detektionskanal 35 und die restliche Energie auf den zweiten Detektionskanals 37 geleitet. In dieser Situation wären die ersten Lichtpulse im Vergleich zu dem zweiten Lichtpulsen also schwächer.

Mit der vorliegenden Erfindung wird ein neuartiges Verfahren zum Bestimmen eines Abstands von Objekten mithilfe von optoelektronischen Sensoren nach dem Laufzeitverfahren bereitgestellt. Dieses Verfahren zeichnet sich durch besonders vielseitige Verwendungsmöglichkeiten, eine besonders hohe Dynamik der verwendbaren Lichtpulse und durch eine besonders hohe Genauigkeit, insbesondere bei sehr starken Lichtpulsen aus.

Im Wesentlichen löst die Erfindung die Aufgabe dadurch, dass die zurückgestrahlten Lichtpulse aufgeteilt werden jeweils in einen ersten und einem zweiten Lichtpuls, wobei der erste und der zweite Lichtpuls unterschiedliche Pulsenergien aufweisen, und dass die ersten Lichtpulse und die zweiten Lichtpulse in einem ersten Detektionskanal beziehungsweise einem zweiten Detektionskanal vermessen werden.. Die Begriffe Amplitude, Pulsenergie und Pulshöhe werden hier Im Wesentlichen synonym verwendet. Beim Aussenden des gesendeten Lichtpulses wird eine Zeitmessung gestartet, die beispielsweise durch das Überschreiten einer festgelegten Schwelle durch das Echosignal beendet wird. Als Echosignal wird hier dasjenige Empfangssignal bezeichnet, welches durch einen von einem Objekt zurückgestrahlten Lichtpuls ausgelöst wird. Sowohl für den ersten als auch für den zweiten Lichtpuls wird eine Laufzeitmessung durchgeführt, die mit einem Amplitudenfehler behaftet ist.

Die Auswerteeinheit kann so ausgebildet sein, dass sie die Zeitdifferenz zwischen den Empfangszeitpunkten für den ersten Lichtpuls und dem zweiten Lichtpuls bestimmen kann.

Der Erfindung liegt die Erkenntnis zugrunde, dass in der Zeitdifferenz zwischen Empfangszeitpunkten für Lichtpulse mit unterschiedlicher Pulsenergien Information über die Amplitude der Echosignale enthalten sind.

Zur Korrektur des Entfernungsmesswertes des amplitudenfehlerbehafteten Einzelmesswerts kann eine Speichereinrichtung vorgesehen sein, in der zumindest eine empirisch gewonnene Korrekturtabelle oder-kurve enthalten sein kann. Diese Korrekturtabelle oder -kurve kann Korrekturwerte enthalten, die für wenigstens eine konstante Kalibrierentfernung jeweils mit verschiedenen Kalibrieramplituden durchgeführten Kalibriermessungen erhalten wurden. Der Korrekturtabelle kann prinzipiell für jede gemessene Zeitdifferenz von Empfangszeitpunkten eines ersten Lichtpulses und eines zweiten Lichtpulses mit jeweils unterschiedlichen Pulsenergien ein entsprechender Korrekturwert entnommen werden.

Eine Messung, deren Messergebnis bezüglich des Amplitudenfehlers korrigiert ist, besteht aus mindestens zwei Einzelmessungen, nämlich der Messung des Empfangszeitpunkts für den ersten, insbesondere stärkeren, Lichtpuls und der Messung des Empfangszeitpunkts für den zweiten, insbesondere schwächeren, Lichtpuls. Die Korrektur erfolgt anhand der Zeitdifferenz zwischen den beiden Einzelmessungen anhand der empirisch ermittelten Korrekturtabelle oder -kurve.

### Bezugszeichenliste

- 10: gattungsgemäßer optoelektronischer Sensor
- 100: erfindungsgemäßer optoelektronischer Sensor
- 20: Sendeeinheit
- 24: vertikale Achse
- 22: gesendeter Lichtpuls
- 30: Empfangseinheit
- 32: zurückgestrahlte Lichtpuls
- 321: detektierter Lichtpuls mit erster, höherer Pulsenergie
- 322: detektierter Lichtpuls mit zweiter, niedrigerer Pulsenergie
- 34: vertikale Achse für Empfangsleistung PR
- 341: vertikale Achse für Empfangsleistung PR
- 342: vertikale Achse für Empfangsleistung PR
- 35: erster Detektionskanal
- 36: Schwelle
- 361: zweite, niedrigere Schwelle
- 362: zweite, höhere Schwelle
- 37: zweiter Detektionskanal
- 38: Strahlteilereinrichtung
- 39: Empfangsoptik, Linse
- 40: Steuer- und Auswerteeinheit
- 50: zu vermessendes Objekt
- 60: Erfassungsbereich
- 71: Kalibrierkurve für Lichtpulse mit erster, höherer Pulsenergie
- 72: Kalibrierkurve für Lichtpulse mit zweiter, niedrigerer Pulsenergien
- 73: Grenzbereich unendlich steiler Anstiegsflanken der Lichtpulse
- 76: Kalibrierkurve für herkömmliche Amplitudenkompensation
- d: Entfernung des Objekts 50
- Δ: Differenz der für verschiedene Pulsenergien gemessenen Empfangszeitpunkte
- k(Δ): Korrekturwert
- PT: Sendeleistung
- PR: Empfangsleistung
- t1: Aussendezeitpunkt eines Lichtpulses
- t2: Empfangszeitpunkt eines Lichtpulses 32
- t3: Zeitpunkt, zu dem die abfallende Flanke des Lichtpulses 32 die Schwelle 36 durchstößt
- t21: Empfangszeitpunkt eines Lichtpulses
- t22: Empfangszeitpunkt eines Lichtpulses
- t221: Empfangszeitpunkt eines Lichtpulses
- t222: Empfangszeitpunkt eines Lichtpulses

## Patentansprüche

1. Verfahren zum Messen einer Entfernung von Objekten, bei dem
eine Sendeeinheit (20) Lichtpulse (22) aussendet,
eine Empfangseinheit (30) von einem zu vermessenden Objekt (50) zurückgestrahlte Lichtpulse (32) detektiert und
aus einer Zeitdifferenz zwischen einem Empfangszeitpunkt (t2) eines Lichtpulses (32) und einem Aussendezeitpunkt (t1) dieses Lichtpulses (22) eine Entfernung (d) des Objekts (50) bestimmt wird,
wobei die zurückgestrahlten Lichtpulse (32) vor der Detektion in der Empfangseinheit (30) aufgeteilt werden jeweils in einen ersten Lichtpuls (321) und einen zweiten Lichtpuls (322), wobei der erste Lichtpuls (321) im Vergleich zu dem zweiten Lichtpuls (322) eine unterschiedliche Energie aufweist,
wobei die ersten Lichtpulse (321) in einem ersten Detektionskanal (35) der Empfangseinheit (30) detektiert werden,
wobei die zweiten Lichtpulse (322) in einem zweiten Detektionskanal (37) der Empfangseinheit (30) detektiert werden,
wobei als Empfangszeitpunkt (t21, t22) derjenige Zeitpunkt gewertet wird, zu dem eine ansteigende Flanke eines detektierten Lichtpulses (321, 322) eine Schwelle (36) durchstößt,
wobei einer Differenz (Δ) von Empfangszeitpunkten (t21, t22), die für einen ersten Lichtpuls (321) und einen zweiten Lichtpuls (322) gemessen werden, ein Korrekturwert (k(Δ)) zugeordnet wird,
wobei einer der Empfangszeitpunkte (t21, t22), insbesondere derjenige Empfangszeitpunkt (t21), der für den Lichtpuls (321) mit höherer Pulsenergie erhalten wird, korrigiert wird, indem der Korrekturwert (k(Δ)) von diesem Empfangszeitpunkt (t21) subtrahiert wird und
wobei für verschiedene Differenzen (Δ) von Empfangszeitpunkten (t21, t22), die für einen ersten Lichtpuls (321) und einen zweiten Lichtpuls (322) gemessen werden, die Korrekturwerte (k(Δ)) durch Kalibrierungsmessungen gewonnen werden.

2. Verfahren nach Anspruch 1,
**dadurch gekennzeichnet,**
**dass** Kalibrierkurven (71, 72) ermittelt werden, die jedem Paar von Empfangszeitpunkten (t221, t222), die für ein bestimmtes Paar eines ersten Lichtpulses (321) und eines zweiten Lichtpulse (322) gewonnen werden, ein Korrekturwert (k(Δ)) zuordnen.

3. Verfahren nach Anspruch 2,
**dadurch gekennzeichnet,**
**dass** Kalibrierkurven (71, 71) ermittelt werden für unterschiedliche Abstände der Pulsenergien des ersten Lichtpulses (321) und des zweiten Lichtpulses (322).

4. Verfahren nach einem der Ansprüche 1 bis 3,
**dadurch gekennzeichnet,**
**dass** vor einer Messung unterschiedliche Pulsenergien der gesendeten Lichtpulse (221, 222) und unterschiedliche Abstände der Pulsenergien des ersten Lichtpulses (321) und des zweiten Lichtpulses (322) für ein zu vermessendes Objekt (50) getestet werden und
**dass** die Messung mit einer Pulsenergie der gesendeten Lichtpulse (221, 222) und einem Abstand der Pulsenergien des ersten Lichtpulses (321) und des zweiten Lichtpulses (322) durchgeführt wird, bei denen gemäß den Kalibrierkurven (71, 72) eine möglichst geringe Messunsicherheit erreicht wird.

5. Verfahren nach einem der Ansprüche 1 bis 4,
**dadurch gekennzeichnet,**
**dass** Messungen mit mehreren verschiedenen Paaren von verschiedenen Pulsenergien des ersten Lichtpulses (321) und des zweiten Lichtpulses (322) durchgeführt werden.

6. Verfahren nach einem der Ansprüche 1 bis 5,
**dadurch gekennzeichnet,**
**dass** die detektierten Lichtpulse (321, 322) mit mehr als einer Schwelle (36, 362) verglichen werden.

7. Verfahren nach einem der Ansprüche 1 bis 6,
**dadurch gekennzeichnet,**
**dass** die Pulsenergien der gesendeten Lichtpulse in einem Messzyklus variiert werden.

8. Verfahren nach einem der Ansprüche 1 bis 7,
**dadurch gekennzeichnet,**
**dass** die Pulsenergieabstände des ersten Lichtpulses (321) und des zweiten Lichtpulses (322) in einem Messzyklus in einer Rampe hochgefahren werden, gemäß einer Dreiecksfunktion oder gemäß einer Sägezahnfunktion variiert werden.

9. Optoelektronischer Sensor zum Messen einer Entfernung von Objekten mit einer Sendeeinheit (20) zum Aussenden von Lichtpulsen (22) in einen Erfassungsbereich (60),
mit einer Empfangseinheit (30) zum Detektieren von Lichtpulsen (32), die von einem zu vermessenden Objekt (50) im Erfassungsbereich (60) zurückgestrahlt werden, und
mit einer Steuer- und Auswerteeinheit (40) zum Ansteuern der Sendeeinheit (20) und zum Auswerten der von der Empfangseinheit (30) detektierten Lichtpulse (32),
wobei die Steuer- und Auswerteeinheit (40) dazu eingerichtet ist, aus einer Zeitdifferenz zwischen einem Empfangszeitpunkt (t2) eines Lichtpulses (32) und einem Aussendezeitpunkt (t1) dieses Lichtpulses (22) eine Entfernung (d) des zu vermessenden Objekts (50) zu bestimmen,
wobei zum Aufteilen der zurückgestrahlten Lichtpulse (32) vor der Detektion eine Strahlteilereinrichtung (38) vorhanden ist, die die zurückgestrahlten Lichtpulse (32) jeweils in einen ersten Lichtpuls (321) und einen zweiten Lichtpuls (322) aufteilt, wobei der erste Lichtpuls (321) im Vergleich zu dem zweiten Lichtpuls (322) eine unterschiedliche Energie aufweist,
wobei die Empfangseinheit (30) einen ersten Detektionskanal (35) zum Nachweisen der ersten Lichtpulse (321) und einen zweiten Detektionskanal (37) zum Nachweis der zweiten Lichtpulse (322) aufweist und
wobei die Steuer- und Auswerteeinheit (40) dazu eingerichtet ist,
als Empfangszeitpunkt (t21, t22) eines detektierten Lichtpulses (321, 322) denjenigen Zeitpunkt zu werten, zu dem eine ansteigende Flanke des detektierten Lichtpulses (321, 322) eine Schwelle (36) durchstößt,
einer Differenz (Δ) von Empfangszeitpunkten (t21, t22), die für einen ersten Lichtpuls (321) und einen zweiten Lichtpuls (322) gemessen werden, einen Korrekturwert (k(Δ)) zuzuordnen,
einen der Empfangszeitpunkte (t21, t22), insbesondere denjenigen Empfangszeitpunkt (t21), der für den Lichtpuls (321) mit höherer Pulsenergie erhalten wird, zu korrigieren, indem der Korrekturwert (k(Δ)) von diesem Empfangszeitpunkt (t21) subtrahiert wird, und
für verschiedene Differenzen (Δ) von Empfangszeitpunkten (t21, t22), die für einen ersten Lichtpuls (321) und einen zweiten Lichtpuls (322) gemessen werden, die Korrekturwerte (k(Δ)) durch Kalibrierungsmessungen zu gewinnen.

10. Optoelektronischer Sensor nach Anspruch 9,
**dadurch gekennzeichnet,**
**dass** die Steuer- und Auswerteeinheit (40) dazu eingerichtet ist, dass Verfahren nach einem der Ansprüche 1 bis 8 bei dem optoelektronischen Sensor durchzuführen.

11. Optoelektronischer Sensor nach einem der Ansprüche 9 oder 10,
**dadurch gekennzeichnet,**
**dass** der erste Detektionskanal (35) und der zweite Detektionskanal (37) strahlabwärts von der Strahlteilereinrichtung (38) identisch ausgebildet sind.

## Claims

1. Method for measuring a range of objects wherein
a transmission unit (20) transmits light pulses (22),
a reception unit (30) detects light pulses (32) which are radiated back from an object (50) to be measured and
a range (d) of the object (50) is determined from a time difference between a reception time (t2) of a light pulse (32) and a transmission time (t1) of this light pulse (22),
wherein light pulses (32) which are radiated back, before the detection in the reception unit (30), are divided into, in each case, a first light pulse (321) and a second light pulse (322), the first light pulse (321) having a different energy in comparison to the second light pulse (322),
wherein the first light pulses (321) are detected in a first detection channel (35) of the reception unit (30),
wherein the second light pulses (322) are detected in a second detection channel (37) of the reception unit (30), and
wherein, as a reception time (t21, t22), the time is taken where a rising slope of a detected light pulse (321, 322) rises above a threshold (36),
wherein a correction value (k(Δ)) is attributed to a difference (Δ) of reception times (t21, t22) which a measured for a first light pulse (321) and a second light pulse (322),
wherein one of the reception times (t21, t22), in particular the reception time (t21) being obtained for the light pulse (321) having a higher pulse energy, is corrected by subtracting the correction value (k(Δ)) from this reception time and wherein the correction values (k(Δ)) for different differences (Δ) of reception times (t21, t22) which are measured for a first light pulse (321) and a second light pulse (322) are obtained by calibration measurements.

2. Method according to claim 1,
**characterized in**
**that** calibration curves (71, 72) are determined which attribute a correction value (k(Δ)) to each pair of reception times (t221, t222) obtained for a specific pair of a first light pulse (321) and a second light pulse (322).

3. Method according to claim 2,
**characterized in**
**that** calibration curves (71, 71) are determined for different spacings of the pulse energies of the first light pulses (321) and the second light pulses (322).

4. Method according to 1 of the claims 1 to 3,
**characterized in**
**that**, before a measurement, different pulse energies of the transmitted light pulses (221, 222) and different spacings of the pulse energies of the first light pulse (321) and the second light pulse (322) are tested for an object (50) to be measured and
**that** the measurement is carried out with a pulse energy of the transmitted light pulses (221, 222) and a spacing of the pulse energies of the first light pulse (321) and the second light pulse (322) with which, according to the calibration curves (71, 72), an as small as possible measurement uncertainty is achieved.

5. Method according to 1 of the claims 1 to 4,
**characterized in**
**that** measurements are carried out with a plurality of different pairs of different pulse energies of the first light pulse (321) and the second light pulse (322).

6. Method according to 1 of the claims 1 to 5,
**characterized in**
**that** the detected light pulses are compared with more than one threshold (36, 362).

7. Method according to 1 of the claims 1 to 6,
**characterized in**
**that** the pulse energies of the transmitted light pulses are varied in a measurement cycle.

8. Method according to 1 of the claims 1 to 7,
**characterized in**
**that** the spacings of the pulse energies of the first light pulse (321) and the second light pulse (322) are ramped up in a measurement cycle or are varied according to triangle function or a sawtooth function.

9. Optoelectronic sensor for measuring a range of objects having a transmission unit (20) for transmitting light pulses (22) into a capturing region (60),
having a reception unit (30) for detecting of light pulses (32) which are radiated back from an object (50) to be measured in the capturing region (60) and having a control and evaluation unit (40) for controlling the transmission unit (20) and for evaluating of light pulses (32) detected by the reception unit (30), wherein the control and evaluation unit (40) is designed for determining a range (d) of the object (50) to be measured from a time difference between a reception time (t2) of a light pulse (32) and a transmission time (t1) of this light pulse (22),
wherein, for dividing of the back radiated light pulses (32) before the detection, a beam splitter device (38) is present which divides the back radiated light pulses (32), in each case, into a first light pulse (321) and a second light pulse (322), wherein the first light pulse (321) has a different energy in comparison to the second light pulse,
wherein the reception unit (30) has a first detection channel (35) for detecting the first light pulses (321) and a second detection channel (37) for detecting the second light pulse (322) and
wherein the control and evaluation unit (40) is designed for taking as a reception time (t21, t22) of a detected light pulse (321, 322) the time when a rising slope of the detected light pulse (321, 322) rises above a threshold (36),
attributing a correction value (k(Δ)) to a difference (Δ) of reception times (t21, t22) which are measured for a first light pulse (321) and a second light pulse (322),
correcting one of the reception times (t21, t22), in particular the reception time (t21) which is obtained for the light pulse (321) having the higher pulse energy by subtracting the correction value (k(Δ)) from this reception time (t21), and obtaining the correction values (k(Δ)) for different differences (Δ) of reception times (t21, t22) which are measured for a first (321) and a second light pulse (322) by means of calibration measurements.

10. Optoelectronic sensor according to claim 9,
**characterized in**
**that** the control and evaluation unit (40) is designed for carrying out the method according to 1 of the claims 1 to 8 with the optoelectronic sensor.

11. Optoelectronic sensor according to one of the claims 9 or 10, **characterized in**
**that** the first detection channel (35) and the second detection channel (37) are designed identically downstream of the beam splitter device (38).

## Revendications

1. Procédé pour mesurer un éloignement d'objets, selon lequel
une unité d'émission (20) envoie des impulsions lumineuses (22),
une unité de réception (30) détecte les impulsions lumineuses (32) renvoyées par un objet (50) à mesurer et
un éloignement (d) de l'objet (50) est défini à partir d'une différence de temps entre un moment de réception (t2) d'une impulsion lumineuse (32) et un moment d'émission (t1) de cette impulsion lumineuse (22),
dans lequel les impulsions lumineuses (32) renvoyées sont divisées avant la détection dans l'unité de réception (30) respectivement en une première impulsion lumineuse (321) et une deuxième impulsion lumineuse (322), dans lequel la première impulsion lumineuse (321) présente en comparaison de la deuxième impulsion lumineuse (322) une énergie différente,
dans lequel les premières impulsions lumineuses (321) sont détectées dans un premier canal de détection (35) de l'unité de réception (30),
dans lequel les deuxièmes impulsions lumineuses (322) sont détectées dans un deuxième canal de détection (37) de l'unité de réception (30), et
dans lequel le moment auquel un flanc ascendant d'une impulsion lumineuse (321, 322) détectée pénètre un seuil (36) est évalué comme moment de réception (t21, t22),
dans lequel une valeur de correction (k(Δ)) est associée à une différence (Δ) de moments de réception (t21, t22), qui sont mesurés pour une première impulsion lumineuse (321) et une deuxième impulsion lumineuse (322), dans lequel un des moments de réception (t21, t22), en particulier le moment de réception (t21) qui est reçu pour l'impulsion lumineuse (321) avec une énergie d'impulsion plus élevée, est corrigé du fait que la valeur de correction (k(Δ)) est soustraite de ce moment de réception (t21) et
dans lequel pour différentes différences (Δ) de moments de réception (t21, t22), qui sont mesurés pour une première impulsion lumineuse (321) et une deuxième impulsion lumineuse (322), les valeurs de correction (k(Δ)) sont obtenues par des mesures d'étalonnage.

2. Procédé selon la revendication 1,
**caractérisé en ce**
**que** des courbes d'étalonnage (71, 72) sont déterminées, qui associent une valeur de correction (k(Δ)) à chaque paire de moments de réception (t221, t222) qui sont obtenus pour une paire définie d'une première impulsion lumineuse (321) et d'une deuxième impulsion lumineuse (322).

3. Procédé selon la revendication 2,
**caractérisé en ce**
**que** des courbes d'étalonnage (71, 72) sont déterminées pour différentes distances des énergies d'impulsion de la première impulsion lumineuse (321) et de la deuxième impulsion lumineuse (322).

4. Procédé selon l'une quelconque des revendications 1 à 3,
**caractérisé en ce**
**qu'**avant une mesure différentes énergies d'impulsion des impulsions lumineuses (221, 222) envoyées et différentes distances des énergies d'impulsion de la première impulsion lumineuse (321) et de la deuxième impulsion lumineuse (322) pour un objet (50) à mesurer sont testées et que la mesure est réalisée avec une énergie d'impulsion des impulsions lumineuses (221, 222) envoyées et une distance des énergies d'impulsion de la première impulsion lumineuse (321) et de la deuxième impulsion lumineuse (322), pour lesquelles selon les courbes d'étalonnage (71, 72) une incertitude de mesure la plus faible possible est atteinte.

5. Procédé selon l'une quelconque des revendications 1 à 4,
**caractérisé en ce**
**que** des mesures avec plusieurs différentes paires de différentes énergies d'impulsion de la première impulsion lumineuse (321) et de la deuxième impulsion lumineuse (322) sont réalisées.

6. Procédé selon l'une quelconque des revendications 1 à 5,
**caractérisé en ce**
**que** les impulsions lumineuses (321, 322) détectées sont comparées à plus d'un seuil (36, 362).

7. Procédé selon l'une quelconque des revendications 1 à 6,
**caractérisé en ce**
**que** les énergies d'impulsions des impulsions lumineuses envoyées dans un cycle de mesure sont modifiées.

8. Procédé selon l'une quelconque des revendications 1 à 7,
**caractérisé en ce**
**que** les distances d'énergie d'impulsion de la première impulsion lumineuse (321) et de la deuxième impulsion lumineuse (322) dans un cycle de mesure sont augmentées selon une rampe, sont modifiées selon une fonction triangulaire ou selon une fonction en dents de scie.

9. Capteur optoélectronique pour mesurer un éloignement d'objets avec une unité d'émission (20) pour l'émission d'impulsions lumineuses (22) dans une zone de détection (60),
avec une unité de réception (30) pour la détection d'impulsions lumineuses (32), qui sont renvoyées par un objet (50) à mesurer dans la zone de détection (60), et
avec une unité de commande et d'évaluation (40) pour la commande de l'unité d'émission (20) et pour l'évaluation des impulsions lumineuses (32) détectées par l'unité de réception (30),
dans lequel l'unité de commande et d'évaluation (40) est conçue pour définir à partir d'une différence de temps entre un moment de réception (t2) d'une impulsion lumineuse (32) et un moment d'émission (t1) de cette impulsion lumineuse (22) un éloignement (d) de l'objet (50) à mesurer,
dans lequel pour la division des impulsions lumineuses (32) renvoyées avant la détection un dispositif diviseur de faisceau (38) est présent, qui divise les impulsions lumineuses (32) renvoyées respectivement en une première impulsion lumineuse (321) et une deuxième impulsion lumineuse (322), dans lequel la première impulsion lumineuse (321) présente en comparaison de la deuxième impulsion lumineuse (322) une énergie différente,
dans lequel l'unité de réception (30) présente un premier canal de détection (35) pour la détection des premières impulsions lumineuses (321) et un deuxième canal de détection (37) pour la détection des deuxièmes impulsions lumineuses (322) et
dans lequel l'unité de commande et d'évaluation (40) est conçue pour considérer le moment auquel un flanc ascendant de l'impulsion lumineuse (321, 322) détectée pénètre un seuil (36) comme moment de réception (t21, t22) d'une impulsion lumineuse (321, 322) détectée,
pour associer une valeur de correction (k(Δ)) à une différence (Δ) de moments de réception (t21, t22), qui sont mesurés pour une première impulsion lumineuse (321) et une deuxième impulsion lumineuse (322),
pour corriger un des moments de réception (t21, t22), en particulier le moment de réception (t21) qui est reçu pour l'impulsion lumineuse (321) avec une énergie d'impulsion plus élevée, du fait que la valeur de correction (k(Δ)) est soustraite de ce moment de réception (t21), et
pour obtenir pour différentes différences (Δ) de moments de réception (t21, t22), qui sont mesurés pour une première impulsion lumineuse (321) et une deuxième impulsion lumineuse (322), les valeurs de correction (k(Δ)) au moyen de mesures d'étalonnage.

10. Capteur optoélectronique selon la revendication 9,
**caractérisé en ce**
**que** l'unité de commande et d'évaluation (40) est conçue pour mettre en oeuvre le procédé selon l'une quelconque des revendications 1 à 8 pour le capteur optoélectronique.

11. Capteur optoélectronique selon l'une quelconque des revendications 9 ou 10, **caractérisé en ce**
**que** le premier canal de détection (35) et le deuxième canal de détection (37) en aval du dispositif diviseur de faisceau (38) sont réalisés de manière identique.
